(19) Europäisches Patentamt
European Patent Office
Office européen des brevets

(11) EP 1 291 402 B1

(12) **EUROPEAN PATENT SPECIFICATION**

(45) Date of publication and mention of the grant of the patent:
**13.06.2007 Bulletin 2007/24**

(51) Int Cl.:
***C09D 129/02*** *(2006.01)* ***C08K 5/09*** *(2006.01)*
***C08K 13/02*** *(2006.01)*

(21) Application number: **02019163.1**

(22) Date of filing: **30.08.2002**

(54) **Ethylene-vinyl alcohol copolymer composition, and powder coating composition comprising IT**

Ethylen-Vinylalkoholcopolymerzusammensetzung und Pulverbeschichtungszusammensetzung, die diese umfasst

Mélange à base de copolymère éthylène/alcool de vinyle et revêtement en poudre à partir de la composition

(84) Designated Contracting States:
**AT BE BG CH CY CZ DE DK EE ES FI FR GB GR IE IT LI LU MC NL PT SE SK TR**

(30) Priority: **03.09.2001 JP 2001265944**

(43) Date of publication of application:
**12.03.2003 Bulletin 2003/11**

(73) Proprietor: **KURARAY CO., LTD.**
**Kurashiki City, Okayama Prefecture 710 (JP)**

(72) Inventor: **Kazeto, Osamu**
**Kurashiki-city,**
**Okayama-pref. (JP)**

(74) Representative: **Vossius & Partner**
**Siebertstrasse 4**
**81675 München (DE)**

(56) References cited:
**EP-A- 0 123 927**
**EP-A- 1 067 152**
**US-A- 3 415 771**
**US-A- 4 774 137**
**US-A- 5 260 371**

- **PATENT ABSTRACTS OF JAPAN vol. 1998, no. 01, 30 January 1998 (1998-01-30) & JP 09 241537 A (KURARAY CO LTD), 16 September 1997 (1997-09-16)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 291 402 B1

## Description

The present invention relates to an ethylene-vinyl alcohol copolymer composition that comprises a powder of an ethylene-vinyl alcohol copolymer and inorganic particles, and to a powder coating composition that contains the composition. The invention also relates to a method for producing such an ethylene-vinyl alcohol copolymer composition that comprises a powder of an ethylene-vinyl alcohol copolymer and inorganic particles.

Powder of polyethylene, polyamide or epoxy resin has heretofore been used for powder coating resins essentially for preventing metal (substrate) from rusting and for protecting it from solvents. In particular, these days, it is desired to refrain from using solvent-type coating compositions for reducing the load thereof to the environment. In that situation, powder coating compositions have attracted specific interest in expectation of increased productivity and cost reduction.

On the other hand, a powder of acrylic, epoxy, polyamide or polyethylene resin is mainly used for powdery coating resins for preventing metal from being rusted or corroded.

However, since the gas-barrier properties and/or the chemical resistance of these resins are insufficient, the resin coating films must be very thick. In addition, since the interlayer adhesiveness of the resin coating films to the surface of metal is insufficient, the metal surface must be pre-treated with a primer or the like before being coated .

To solve the problems noted above, Japanese Patent Laid-Open No. 115472/1991 discloses a method of using an ethylene-vinyl alcohol copolymer (hereinafter abbreviated as EVOH) powder for a powder coating resin.

In addition, Japanese Patent Laid-Open No. 241537/1997 discloses a powder coating resin composition that comprises 100 parts by weight of a saponified ethylene-vinyl acetate copolymer having an ethylene content of from 15 to 70 mol% and a degree of saponification of the vinyl acetate moiety thereof of at least 80 mol% and having a melt index of from 1 to 100 g/10 min, from 0.0001 to 1 part by weight of an acid compound, and from 0.1 to 1 part by weight of a low-boiling compound having a boiling point of not higher than 200°C. This is for improving the uniformity of the thickness of the resin-coating layer of the articles coated with the EVOH powder and for improving the impact resistance of the surface of the coating layer. The laid-open publication discloses that one preferred example of the low-boiling compound having a boiling point of not higher than 200°C is water in view of the safety and the environmental aspect. It further discloses that, when the content of the low-boiling compound having a boiling point of not higher than 200°C in the composition is larger than 1 part by weight and when the composition is applied to substrates in a flame spray coating process in which rapid temperature increase is inevitable, then the surface of the coating layer formed is strongly roughened.

However, EVOH is a polymer of high hydrophilicity and it absorbs water. In particular, as compared with ordinary EVOH pellets sold on the market, EVOH powder having a particle size of smaller than 850 μm has a large surface area per unit volume thereof and its water absorption is high. (The EVOH powder having a particle size of smaller than 850 μm referred to herein is meant to indicate an EVOH powder that contains at least 80 % by weight of particles capable of passing through a sieve having a nominal size of 850 μm as stipulated in JIS Z-8801.)

Therefore, when the EVOH powder having such a small particle size is left in an open space for a long period of time, it will absorb water. In that condition, it may contain at least 1 part by weight (for example, from 1 to 3 parts by weight or so) of water relative to 100 parts by weight of EVOH therein. Accordingly, when such an EVOH powder having been left standing open for a long period of time is used for powdery coating compositions, it has heretofore been said that the powder is preferably dried before use.

However, the drying treatment requires additional cost and is troublesome. In particular, when only a small amount of EVOH powder is needed each time, drying the EVOH powder must be repeated many times whenever it is used, and the EVOH powder will be thermally deteriorated. In addition, when conventional EVOH powder is used for coating substrates continuously for a long period of time in a high-humidity condition, the water content of the EVOH powder gradually increases, and, as a result, the uniformity of the coating film formed is often lost (that is, the coating film would not be smooth and glossy). Therefore, depending on the working environment (especially in a high-humidity condition), it is not always easy to continue the coating operation with the EVOH powder for a long period of time. In that situation, it is desired to develop a technique capable of using even an EVOH powder that contains one or more parts by weight of water relative to 100 parts by weight of EVOH therein for coating articles to form a coating film of high uniformity thereon.

The problems mentioned above can be solved by an ethylene-vinyl alcohol copolymer composition that comprises 100 parts by weight of a powder (A) having a particle size of from 22 to 850 μm comprising an ethylene-vinyl alcohol copolymer (a) which has an ethylene content of from 2 to 60 mol% and has a degree of saponification of higher than 95 %, and from 0.0001 to 2 parts by weight of inorganic particles (B) of which the primary particles have a mean particle size of from 1 to 100 nm. One preferred embodiment of the composition is characterized in that the inorganic particles (B) adhere to the surface of the powder (A).

In another preferred embodiment of the composition, the ethylene-vinyl alcohol copolymer (a) contains from 10 to 5000 ppm of a carboxylic acid. In a more preferred embodiment thereof, the carboxylic acid is at least one selected from a group consisting of acetic acid, propionic acid and lactic acid.

In still another embodiment of the composition, the ethylene-vinyl alcohol copolymer (a) contains from 5 to 500 ppm, in terms of the elementary metal, of an alkali metal salt. In still another embodiment thereof, the ethylene-vinyl alcohol copolymer (a) contains from 10 to 5000 ppm of a carboxylic acid and from 5 to 500 ppm, in terms of the elemental metal, of an alkali metal salt, and the ratio by weight of the carboxylic acid to the alkali metal salt (in terms of the elemental metal) therein, carboxylic acid/alkali metal salt, falls between 0.1 and 15.

In still another embodiment of the composition, the ethylene-vinyl alcohol copolymer (a) contains from 5 to 250 ppm, in terms of the elemental metal, of an alkaline earth metal salt. In still another embodiment thereof, the ethylene-vinyl alcohol copolymer (a) contains from 10 to 5000 ppm of a carboxylic acid and from 5 to 250 ppm, in terms of the elemental metal, of an alkaline earth metal salt, and the ratio by weight of the carboxylic acid to the alkaline earth metal salt (in terms of the elemental metal) therein, carboxylic acid/alkaline earth metal salt, falls between 0.2 and 15.

In still another embodiment of the composition, the ethylene-vinyl alcohol copolymer (a) contains from 1 to 300 ppm, in terms of the phosphate radical, of a phosphate compound.

In still another embodiment of the composition, the ethylene-vinyl alcohol copolymer (a) is modified with a silicon-containing olefinic unsaturated monomer, and the degree of modification of the copolymer with the monomer falls between 0.0002 and 0.5 mol%.

In still another embodiment of the composition, the inorganic particles (B) are of silica and/or aluminium oxide. In still another embodiment thereof, the inorganic particles (B) are hydrophobicated on their surfaces.

In one preferred mode thereof, the ethylene-vinyl alcohol copolymer composition of the invention is used for powder coating compositions. In another preferred mode thereof, the powder coating composition is applied to substrates to give multi-layer structures. In a more preferred embodiment of the multi-layer structures, the substrate is metal.

In another preferred mode thereof, the ethylene-vinyl alcohol copolymer composition of the invention is produced by dry-blending 100 parts by weight of a powder (A) having a particle size of from 22 to 850 $\mu$m comprising an ethylene-vinyl alcohol copolymer (a) that has an ethylene content of from 2 to 60 mol% and has a degree of saponification of higher than 95 %, with from 0.0001 to 2 parts by weight of inorganic particles (B) of which the primary particles have a mean particle size of from 1 to 100 nm.

In still another preferred mode thereof, the ethylene-vinyl alcohol copolymer composition of the invention is produced by dry-blending 100 parts by weight of an ethylene-vinyl alcohol copolymer (a) that has an ethylene content of from 2 to 60 mol% and has a degree of saponification of higher than 95 %, with from 0.0001 to 2 parts by weight of inorganic particles (B) of which the primary particles have a mean particle size of from 1 to 100 nm, followed by grinding the resulting mixture.

Preferably, the EVOH (a) for use in the invention is obtained by saponifying an ethylene-vinyl ester copolymer, for which an ethylene-vinyl acetate copolymer is more preferred,as the raw materials for it are inexpensive and are easily available. The ethylene content of the EVOH (a) for use in the invention falls between 2 and 60 mol%. EVOH having an ethylene content of larger than 60 mol%, if used herein, could not satisfy the requirements of good gas-barrier properties and good chemical resistance of the coating resin film formed. From this viewpoint, the uppermost limit of the ethylene content of the EVOH (a) is preferably at most 57 mol%, more preferably at most 54 mol%, most preferably at most 51 mol%. On the other hand, if EVOH having an ethylene content of smaller than 2 mol% is used in the powdery EVOH coating composition of the invention, the coating film formed of the composition is too hard and its impact resistance is not good. In addition, EVOH having a lower ethylene content has a higher melting point and its decomposition point is apt to lower. Therefore, if EVOH having such a low ethylene content is used in the powdery EVOH coating composition of the invention, the latitude in powder coating with the composition will be narrow. From this viewpoint, the lowermost limit of the ethylene content of the EVOH (a) is preferably at least 5 mold, more preferably at least 10 mol%, even more preferably at least 15 ml%, most preferably at least 20 mol%.

The degree of saponification of the EVOH (a) for use in the invention must be higher than 95 %. EVOH having a degree of saponification of not higher than 95 %, if used herein, could not satisfy the requirements of good gas-barrier properties and good chemical resistance of the coating resin film formed. From the viewpoint of the gas-barrier properties and the chemical resistance of the coating resin film formed, the degree of saponification of the EVOH (a) is preferably at least 96 %, more preferably at least 97 %, even more preferably at least 98 %, still more preferably at least 99 %.

Preferably, the MFR (190°C, 2160 g load) of the EVOH (a) for use in the invention falls between 3 and 150 g/10 min. If EVOH having an MFR of smaller than 3 g/10 min is used in the powdery EVOH coating composition of the invention, the resin flowability will be poor and the surface of the coating film formed of it will be roughened. On the other hand, if EVOH having an MFR of larger than 150 g/10 min is used therein, the thickness of the coating film formed will be uneven. More preferably, the MFR of the EVOH (a) falls between 5 and 120 g/10 min, even more preferably between 8 and 90 g/10 min, still more preferably between 10 and 60 g/10 min. In case where the glossiness of the coating film formed of the powdery coating composition of the invention is a matter of great importance, the MFR (190°C, 2160 g load) of the EVOH (a) to be in the EVOH composition preferably falls between 15 and 60 g/10 min, most preferably between 20 and 60 g/10 min.

As mentioned hereinabove, the vinyl ester to be copolymerized with ethylene is preferably vinyl acetate, which,

however, may be combined with any other vinyl esters of fatty acids (e.g., vinyl propionate, vinyl pivalate).

If desired, ethylene and the vinyl ester may be copolymerized with a minor amount of any other monomer capable of copolymerizing with them. For example, the comonomer includes propylene, isobutylene; $\alpha$-olefins such as $\alpha$-octene, $\alpha$-dodecene; unsaturated acids such as acrylic acid, methacrylic acid, crotonic acid, maleic acid, itaconic acid, and their anhydrides, salts, and mono- or di-alkyl esters; nitriles such as acrylonitrile, methacrylonitrile; amides such as acrylamide, methacrylamide; olefinsulfonic acids such as ethylenesulfonic acid, allylsulfonic acid, methallylsulfonic acid, and their salts; and alkyl vinyl ethers, vinyl ketones, N-vinylpyrrolidone, vinyl chloride, vinylidene chloride.

Preferably, the EVOH (a) for use in the invention is modified with a silicon-containing olefinic unsaturated monomer and the degree of modification thereof with the monomer falls between 0.0002 and 0.5 mol%. When the powdery coating composition that contains the modified EVOH is applied onto substrates, the interlayer adhesiveness between the coating film formed of it and the substrate is improved. In particular, the effect of the modified EVOH is more significant when the composition is applied to metallic substrates. However, when the degree of modification of EVOH with the modifier, i.e. silicon-containing olefinic unsaturated monomer is smaller than 0.0002 mol%, the modified EVOH is not effective for sufficiently improving the interlayer adhesiveness between the coating film formed of the EVOH-containing composition and the substrates coated with it. On the other hand, if the degree of modification of the modified EVOH is larger than 0.5 mol%. the melt flowability of the resin will lower and the surface of the coating resin film formed will be roughened. More preferably, the degree of modification of the EVOH (a) with the silicon-containing olefinic unsaturated monomer falls between 0.001 and 0.1 mol%, even more preferably between 0.005 and 0.07 mol%, most preferably between 0.01 and 0.05 mol%.

Preferably, the silicon-containing olefinic unsaturated monomer for use herein is one or more selected from silicon-containing olefinic unsaturated monomers of the following general formulae (I), (II) and (III):

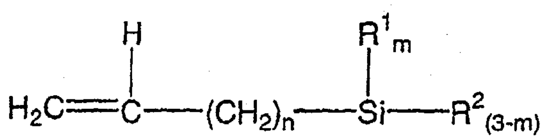

(I)

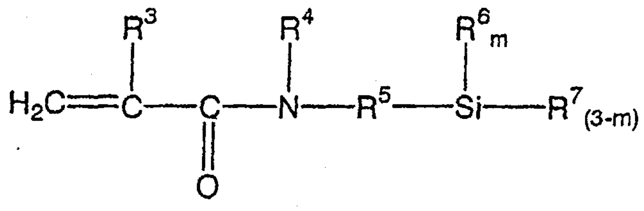

(II)

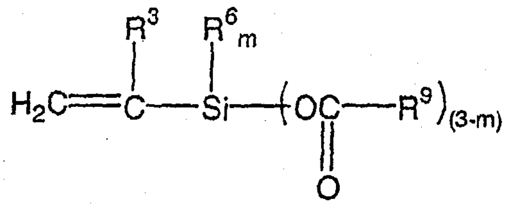

(III)

In these formulae, n ranges from 0 to 1; m ranges from 0 to 2 ;

$R^1$ represents a lower alkyl group having from 1 to 8 carbon atoms, an allyl group, or a lower alkyl group having from 1 to 8 carbon atoms comprising an allyl group; $R^2$ represents an alkoxy group having from 1 to 40 carbon atoms, which may have one or more oxygen-containing substituent(s); $R^3$ represents a hydrogen atom or a methyl group; $R^4$ represents a hydrogen atom or a lower alkyl group having from 1 to 8 carbon atoms; $R^5$ represents an alkylene group, or a divalent organic residue with carbon chains bonded to each other via an oxygen or nitrogen atom; $R^6$ represents a hydrogen atom, a halogen atom, a lower alkyl group, an allyl group, or a lower alkyl group having from 1 to 8 carbon atoms comprising an allyl group; $R^7$ represents an alkoxy group or an acyloxy group, which may have one or more oxygen or nitrogen-containing substituent(s); $R^8$ represents a hydrogen atom, a halogen atom, a lower alkyl group having from 1 to 8 carbon atoms, an allyl group, or a lower alkyl group having from 1 to

8 carbon atoms comprising an allyl group; and $R^9$ represents a lower alkyl group having from 1 to 8 carbon atoms.

Examples of the silicon-containing olefinic unsaturated monomers of formula (I) are vinyltrimethoxysilane, vinylmethyldimethoxysilane, vinyldimethylmethoxysilane, vinyltriethoxysilane, vinylmethyldiethoxysilane, vinyldimethylethoxysilane, allyltrimethoxysilane, allylmethyldimethoxysilane, allyldimethylmethoxysilane, allyltriethoxysilane, allyldimethylethoxysilane, vinyltris (β-methoxyethoxy)silane, and vinylisobutyldimethoxysilane.

Examples of the silicon-containing olefinic unsaturated monomers of formula (II) are 3-(meth)acrylamidopropyltrimethoxysilane, 3-(meth)acrylamidopropyltriethoxysilane, 3-(meth)acrylamidopropyltri(β-methoxyethoxy)silane, 3-(meth)acrylamidopropyltri(N-methylaminoethoxy)silane, 2-(meth)acrylamidoethyltrimethoxysilane, and 1-(meth)acrylamidomethyltrimethoxysilane.

Examples of the silicon-containing olefinic unsaturated monomers of formula (III) are vinyltriacetoxysilane, vinyltripropionyloxysilane, isopropenyltriacetoxysilane, vinylisobutyldiacetoxysilane, vinylmethyldiacetoxysilane, vinyldimethylacetoxysilane, vinylphenyldiacetoxysilane, vinylmonochlorodiacetoxysilane, and vinylmonohydrogendiacetoxysilane.

Of the silicon-containing olefinic unsaturated monomers of formulae (I) to (III), preferred for use herein are vinyltrimethoxysilane, vinyltriethoxysilane and vinyltri(β-methoxyethoxy)silane. Especially preferred are vinyltrimethoxysilane and vinyltriethoxysilane.

The method for obtaining the ethylene-vinyl alcohol copolymer modified with such a silicon-containing olefinic unsaturated monomer is not specifically limited. Preferably, for example, the modified EVOH may be obtained according to a method of ternary copolymerization of ethylene and vinyl acetate with a small amount of a silicon-containing olefinic unsaturated monomer fed to the polymerization reactor; or a method that comprises dissolving EVOH in a suitable solvent such as dimethyl sulfoxide followed by adding a silicon-containing olefinic unsaturated monomer thereto along with a suitable catalyst to thereby graft the EVOH with the silicon-containing olefinic unsaturated monomer; or a method that comprises adding a silicon-containing olefinic unsaturated monomer and a suitable catalyst to EVOH via a plunger pump or the like while the EVOH is melt-kneaded in a twin-screw extruder or the like to thereby graft the EVOH with the silicon-containing olefinic unsaturated monomer. Of those, especially preferred for use herein is the method of ternary copolymerization of ethylene and vinyl acetate with a small amount of a silicon-containing olefinic unsaturated monomer fed to the polymerization reactor, as it is inexpensive.

Preferably, the EVOH (a) for use in the invention contains from 10 to 5000 ppm of a carboxylic acid. The EVOH composition of the invention in which the EVOH (a) contains a carboxylic acid within the defined range is favorable to powder coating application, since the EVOH (a) therein is prevented from being thermally deteriorated in the coating process and therefore the coating film formed is effectively prevented from being yellowed. Preferably, the carboxylic acid for use in the invention has a $pK_a$ of at least 3.5 at 25°C. Carboxylic acids of which the $pK_a$ at 25°C is smaller than 3.5 may be unfavorable for use herein since the pH of the EVOH (a) containing such a carboxylic acid will be difficult to control. In addition, when the powdery EVOH composition that contains such a carboxylic acid is applied to substrates, it may gel and the thickness of the coating film formed of it may be uneven.

Examples of the carboxylic acid usable in the invention are succinic acid, adipic acid, benzoic acid, caprylic acid, lauric acid, glycolic acid, lactic acid, formic acid, acetic acid and propionic acid. However, the dicarboxylic acids such as succinic acid and adipic acid are not so good, since the EVOH composition that contains such a dicarboxylic acid will readily gel and the thickness of the coating film formed of the EVOH composition will be uneven. For the carboxylic acid for use herein, preferred are acetic acid, propionic acid and lactic acid, and more preferred are acetic acid and propionic acid, since they are inexpensive and since their acidity is on a suitable level and the pH of the EVOH (a) that contains such a carboxylic acid is therefore easy to control.

If, however, the carboxylic acid content of the EVOH (a) is larger than 5000 ppm, the powdery EVOH coating composition will gel and the thickness of the coating film formed of it will be uneven. From this viewpoint, the uppermost limit of the carboxylic acid content of the EVOH (a) is preferably at most 1000 ppm, more preferably at most 500 ppm. On the other hand, the lowermost limit of the carboxylic acid content thereof is preferably at least 20 ppm, more preferably at least 30 ppm.

Also preferably, the EVOH (a) for use in the invention contains from 5 to 500 ppm, in terms of the alkali elemental metal, of an alkali metal salt. If an alkali metal salt is contained within the defined range, the interlayer adhesiveness between the coating film formed of the powdery EVOH composition and the substrate coated with the film is effectively improved. In particular, the effect of improving the interlayer adhesion therebetween is remarkable when the coating composition is applied to metallic substrates.

From the viewpoint of the interlayer adhesiveness between the EVOH coating film and the substrate coated with it, the lowermost limit of the alkali metal salt content of the EVOH (a) is preferably at least 10 ppm, more preferably at least 20 ppm, even more preferably at least 50 ppm. On the other hand, for preventing the EVOH coating film formed from being yellowed and for producing a film having a good appearance, the uppermost limit of the alkali metal salt content of the EVOH (a) is preferably at most 400 ppm, more preferably at most 300 ppm.

The alkali metal includes, for example, lithium, sodium and potassium. The alkali metal salt includes, for example, aliphatic carboxylates, aromatic carboxylates, phosphates and metal complexes with such a monovalent metal. Examples of the salt are sodium acetate, potassium acetate, sodium propionate, potassium propionate, sodium lactate, potassium lactate, sodium phosphate, lithium phosphate, sodium stearate, potassium stearate, and sodium salts of ethylenediaminetetraacetic acid. Of those, preferred for use herein are sodium acetate, potassium acetate, sodium propionate, potassium propionate, sodium lactate and potassium lactate.

In the EVOH composition in which the EVOH (a) contains both a carboxylic acid and an alkali metal salt, the ratio by weight of the carboxylic acid to the alkali metal salt (in terms of the elemental metal), carboxylic acid/alkali metal salt (in terms of the elemental metal thereof), preferably falls between 0.1 and 15 in view of the balance between preventing the EVOH film formed of the powdery EVOH coating composition from being yellowed and the improvement in the adhesiveness of the coating film to the substrate. The lowermost limit of the ratio of carboxylic acid/alkali metal salt (in terms of the metal element thereof) is preferably at least 0.2, more preferably at least 0.3. On the other hand, the uppermost limit of the ratio of carboxylic acid/alkali metal salt (in terms of the elemental metal thereof) is preferably at most 12, more preferably at most 10.

Also preferably, the EVOH (a) for use in the invention contains from 5 to 250 ppm, in terms of the elemental alkaline earth metal, of an alkaline earth metal salt. If an alkaline earth metal salt is contained within the defined range, the interlayer adhesiveness between the coating film formed of the powdery EVOH composition and the substrate coated with the film is effectively improved. In particular, the effect of improving the interlayer adhesiveness therebetween is remarkable when the coating composition is applied to metallic substrates.

From the viewpoint of the interlayer adhesiveness between the EVOH coating film and the substrate coated with it, the lowermost limit of the alkaline earth metal salt content of the EVOH (a) is preferably at least 10 ppm, more preferably at least 20 ppm, even more preferably at least 30 ppm. On the other hand, for preventing the EVOH coating film formed from being yellowed and for producing a film having a good appearance, the uppermost limit of the alkaline earth metal salt content of the EVOH (a) is preferably at most 200 ppm, more preferably at most 150 ppm.

The alkaline earth metal includes, for example, beryllium, magnesium, calcium and barium. The alkaline earth metal salt includes, for example, aliphatic carboxylates, aromatic carboxylates, phosphates and metal complexes with such a divalent metal. Examples of the salt are magnesium acetate, calcium acetate, magnesium propionate, calcium propionate, magnesium lactate, calcium lactate, magnesium stearate and calcium stearate. Of those, preferred for use herein are magnesium acetate, calcium acetate, magnesium propionate, calcium propionate, magnesium lactate and calcium lactate.

In the EVOH composition in which the EVOH (a) contains both a carboxylic acid and an alkaline earth metal salt, the ratio by weight of the carboxylic acid to the alkaline earth metal salt (in terms of the metal element), carboxylic acid/alkaline earth metal salt (in terms of the metal element thereof), preferably falls between 0.2 and 15 in view of the balance between preventing the EVOH film formed of the powdery EVOH coating composition from being yellowed and the improvement in the adhesiveness of the coating film to the substrate. The lowermost limit of the ratio of carboxylic acid/alkaline earth metal salt (in terms of the metal element thereof) is preferably at least 0.4, more preferably at least 0.8. On the other hand, the uppermost limit of the ratio of carboxylic acid/alkaline earth metal salt (in terms of the metal element thereof) is preferably at most 12, more preferably at most 10.

Not interfering with the effect of the invention, the EVOH (a) for use herein may contain both an alkali metal salt and an alkaline earth metal salt. In that case, it is desirable that the total amount of the alkali metal salt and the alkaline earth metal salt added to the EVOH (a) falls between 10 and 400 ppm in terms of the metal elements combined.

Also preferably, the EVOH (a) for use in the invention contains from 1 to 300 ppm, in terms of the phosphate radical, of a phosphate compound. The EVOH composition of the invention in which the EVOH (a) contains a phosphate compound within the defined range is favorable to powdery coating application, since the EVOH (a) therein is prevented from being thermally deteriorated in the coating process and therefore the coating film formed is effectively prevented from being yellowed. However, if the phosphate compound content of the EVOH (a) is larger than 300 ppm, the powdery EVOH composition will gel when it is applied onto substrates and the thickness of the coating film formed of it will be uneven. From this viewpoint, the uppermost limit of the phosphate compound content of the EVOH (a) is preferably at most 250 ppm in terms of the phosphate radical of the compound, more preferably at most 200 ppm. On the other hand, the lowermost limit of the phosphate compound content of the EVOH (a) is preferably at least 3 ppm, more preferably at least 5 ppm, even more preferably at least 10 ppm.

The type of the phosphate compound to be added to the EVOH (a) is not specifically defined. It includes various acids such as phosphoric acid, phosphorous acid, and their salts. Any phosphate of any type of primary phosphates, secondary phosphates and tertiary phosphates may be usable herein, and its cation is not specifically defined. Preferred are alkali metal salts and alkaline earth metal salts. Above all, especially preferred for the phosphate compound to be added to the EVOH (a) are phosphoric acid, sodium dihydrogenphosphate, potassium dihydrogenphosphate, disodium hydrogenphosphate and dipotassium hydrogenphosphate; and more preferred are phosphoric acid, sodium dihydrogenphosphate and potassium dihydrogenphosphate.

Without interfering with the object of the invention, a boron compound may be added to the EVOH (a). The boron compound includes, for example, boric acids, boric esters, borate salts and boron hydrides. Concretely, the boric acids are orthoboric acid, metaboric acid and tetraboric acid; the boric esters are triethyl borate and trimethyl borate; and the borate salts are alkali metal salts and alkaline earth metal salts of various boric acids such as those mentioned above, and borax. Of those compounds, preferred for use in the invention is orthoboric acid. When such a boron compound is added to the EVOH (a), its amount is preferably controlled such that the boron compound content of the EVOH (a) may fall between 20 and 2000 ppm, more preferably between 50 and 1000 ppm in terms of the elemental boron of the compound.

As mentioned hereinabove, the EVOH (a) for use in the invention may optionally contain at least one selected from a group consisting of carboxylic acids, alkali metal salts, alkaline earth metal salts, phosphate compounds and boron compounds. The method for preparing the EVOH (a) that contains any of such components is not specifically limited. Some preferred methods for preparing it are as follows: The EVOH (a) is dipped in a solution of an additive component; or the EVOH (a) is melted and mixed with an additive component; or the EVOH (a) is dissolved in a suitable solvent and then mixed with an additive component.

The method of dipping EVOH in a solution of an additive component in order to add the additive component to EVOH may be effected in any mode of batch operation or continuous operation. The morphology of EVOH to be treated according to the method is not specifically limited , and EVOH may be in any form of powders, granules, spheres or columnar pellets. The concentration of the additive component in the solution thereof is not also specifically limited . The solvent for the solution is not also specifically limited , but water is preferred for the solvent since aqueous solutions are easy to handle. The preferred range of the dipping time varies, depending on the morphology of the EVOH to be treated. Preferably, for example, EVOH pellets having a size of from 1 to 10 mm or so will be dipped in the solution for at least 1 hour, more preferably for at least 2 hours.

The mode of dipping EVOH in the solution of an additive component is not specifically limited . For example, EVOH may be dipped in a plurality of different solutions separately containing any of the components, or may be dipped in one solution containing all the components. For simplifying the processing operation, it is desirable that EVOH is dipped in one bath containing all the additive solution at a time. After having been dipped in the additive solution in the manner as above, EVOH is dried. Through the process, the EVOH processed contains at least one additive selected from a group consisting of carboxylic acids, alkali metal salts, alkaline earth metal salts and phosphate compounds.

Without interfering with the object of the invention, two or more different types of EVOH (a) that differ in any of the degree of polymerization, the ethylene content and/or the degree of saponification may be combined for use in the invention. Also without interfering with the object of the invention, the EVOH (a) for use herein may suitably contain any other additives of plasticizer, antioxidant, pigment, UV absorbent, antistatic agent, crosslinking agent, filler and/or reinforcing agent such as various fibers. In particular, when the EVOH composition of the invention is used for powder coating compositions, it is desirable that the EVOH (a) therein contains a pigment

The pigment may be melt-kneaded with the EVOH (a) before the EVOH (a) is ground; or after the EVOH (a) is ground, it may be dry-blended with the pigment. For uniformly dispersing the pigment in the EVOH (a), the former method of kneading pigment in melt with the EVOH (a) before the EVOH (a) is ground is preferred. Also without interfering with the object of the invention, a dispersant of, for example, higher fatty acids may be added to the EVOH (a) for enhancing the dispersibility of the additives in the EVOH (a).

Also without interfering with the object of the invention, any other thermoplastic resin than EVOH may be added to the EVOH (a) for use in the invention. The additional thermoplastic resin includes, for example, various polyolefins (e.g., polyethylene, polypropylene, poly-1-butene, poly-4-methyl-1-pentene, ethylene-propylene copolymer, copolymer of ethylene with an $\alpha$-olefin having at least 4 carbon atoms, copolymer of a polyolefin with maleic anhydride, ethylene-vinyl ester copolymer, ethylene-acrylate copolymer, and modified polyolefins prepared by graft-modifying these polymers with any of unsaturated carboxylic acids or their derivatives), various nylons (e.g., nylon-6, nylon-6,6, nylon-6/6,6 copolymer), polyvinyl chlorides, polyvinylidene chlorides, polyesters, polystyrenes, polyacrylonitriles, and modified polyvinyl alcohol resins.

Also without interfering with the object of the invention, the EVOH (a) for use in the invention may contain a thermosetting resin. The thermosetting resin includes, for example, various epoxy resins, acrylic resins, urethane resins, polyester resins, and their modified resins. One or more of such thermosetting resins may be combined with a curing agent of, for example, amines, acid anhydrides, dibasic acids or blocked isocyanates, and may be added to the EVOH (a).

The EVOH prepared in the manner as above must be processed into the intended EVOH powder (A) having a particle size of from 22 to 850 $\mu$m, except if it is already powder having a particle size of from 22 to 850 $\mu$m. The method of processing the EVOH is not specifically limited. For example, it may be cryogenic grinding; or it may be mechanically ground in a jet mill; or it may be dissolved in a mixed solvent of water/alcohol and then precipitated and deposited as fine particles in a poor solvent such as water or hexane.

The particle size of the EVOH powder (A) of the EVOH (a) having an ethylene content of from 2 to 60 mol% and a degree of saponification of higher than 95 % for use in the invention falls between 22 and 850 $\mu$m. Concretely,

the EVOH powder (A) contains at least 80 % by weight of particles capable of passing through a standard sieve having a nominal size of 850 μm but not through a standard sieve having a nominal size of 22 μm, as stipulated in JIS Z-8801. Containing the EVOH powder (A) having the thus-controlled particle size, the powdery EVOH coating composition of the invention forms a good coating film of high uniformity (that is, a smooth and glossy coating film) on the shaped articles to which it has been applied. If the EVOH powder (A) contains more than 20 % by weight of particles that pass through the 22-μm sieve and if it is used in the EVOH coating composition of the invention, the particles of EVOH (a) therein will readily aggregate and the surface of the coating film formed of the coating composition that contains the thus-aggregated particles will be roughened. On the other hand, if the EVOH powder (A) contains less than 80 % by weight of particles that pass through the 850-μm sieve and if it is used in the EVOH coating composition of the invention, the surface of the coating film formed of the coating composition will also be roughened. More preferably, the particle size of the EVOH powder (A) for use in the invention falls between 26 and 710 μm, more preferably between 32 and 600 μm, most preferably between 38 and 500 μm.

The inorganic particles (B) to be in the resin composition of the invention are characterized in that their primary particles have a mean particle size of from 1 to 100 nm. In fine inorganic powder, in general, the individual particles loosely aggregate to form secondary particles. In the present invention, a mean particle size of the primary particles is defined as the particle size of the primary particles which form the secondary particles . Concretely, the mean particle size of the primary particles of (B) may be determined by measuring the diameter of each primary particle of (B) on the picture of (B) taken with a transmission electronic microscope.

Inorganic particles (B) of which the mean particle size of the primary particles is smaller than 1 nm are difficult to produce. In addition, they are difficult to mix with the EVOH powder (A) to give a homogeneous EVOH composition. Therefore, if such the EVOH composition is used in the powdery coating application, the coating film formed of the composition might not be uniform. On the other hand, if inorganic particles (B) of which the mean particle size of the primary particles is larger than 100 nm are used in the powdery EVOH coating composition, the coating film formed of the composition could also not be uniform.

The lowermost limit of the mean particle size of the primary particles of the inorganic particles (B) for use in the invention is preferably at least 3 nm, more preferably at least 5 nm, even more preferably at least 7 nm. On the other hand, the uppermost limit of the mean particle size of the primary particles of the inorganic particles (B) is preferably at most 85 nm, more preferably at most 70 nm, even more preferably at most 55 nm.

The type of the inorganic particles (B) for use in the invention is not specifically limited . Preferred examples thereof are silica, aluminium oxide, talc, titanium oxide and calcium carbonate. Of those, however, talc, titanium oxide and calcium carbonate are intrinsically colored, and therefore they will be a bar to coloring the EVOH composition of the invention with some pigment. When the powdery EVOH coating composition of the invention is required to form a transparent coating film on substrates, it is desirable that the inorganic particles (B) are transparent. From these viewpoints, silica and aluminium oxide of high transparency are especially preferred for the inorganic particles (B) for use in the invention.

Though the definite reason for it is not clear, the inorganic particles (B) for use in the invention are preferably hydrophobicated on their surfaces, and using the thus-hydrophobicated inorganic particles (B) further enhances the advantages of the invention. Specifically, when the powdery EVOH coating composition contains the surface-hydrophobicated inorganic particles (B), the uniformity of the coating film formed of it is much improved. For hydrophobicating the surfaces of the inorganic particles (B), any known method is employable. For example, the particles may be processed with any of halogenosilanes, alkoxysilanes or siloxanes.

The EVOH composition of the invention comprises 100 parts by weight of a powder (A) having a particle size of from 22 to 850 μm of an ethylene-vinyl alcohol copolymer (a) which has an ethylene content of from 2 to 60 mol% and has a degree of saponification of higher than 95 %, and from 0.0001 to 2 parts by weight of inorganic particles (B) of which the primary particles have a mean particle size of from 1 to 100 nm. One preferred embodiment of the EVOH composition is characterized in that the inorganic particles (B) adhere to the surface of the EVOH powder (A). If the amount of the inorganic particles (B) is smaller than 0.0001 parts by weight relative to 100 parts by weight of the EVOH powder (A) therein, the powdery EVOH coating composition could not attain the effect of the invention of improving the uniformity of the coating film formed of it. On the other hand, if the amount of the inorganic particles (B) is larger than 2 parts by weight relative to 100 parts by weight of the EVOH powder (A) therein, the powdery EVOH coating composition could also not attain the effect of the invention of improving the uniformity of the coating film formed of it, and, in addition, the interlayer adhesiveness between the coating film and the substrate coated with it is strongly reduced. The lowermost limit of the amount of the inorganic particles (B) to be added to the composition is preferably at least 0.001 parts by weight, more preferably at least 0.005 parts by weight, most preferably at least 0.01 parts by weight relative to 100 parts by weight of the EVOH powder (A) in the composition. On the other hand, the uppermost limit of the amount of the inorganic particles (B) is preferably at most 1.5 parts by weight, more preferably at most 1 part by weight, even more preferably at most 0.7 parts by weight, most preferably at most 0.5 parts by weight relative to 100 parts by weight of the EVOH powder (A) in the composition.

The method of producing the EVOH composition of the invention is not specifically limited . Preferably, for example, the composition may be produced as follows: A powder (A) having a particle size of from 22 to 850 μm of the EVOH (a) that has an ethylene content of from 2 to 60 mol% and has a degree of saponification of higher than 95 % is dry-blended with inorganic particles (B) of which the primary particles have a mean particle size of from 1 to 100 nm; or pellets of the EVOH (a) are dry-blended with the inorganic particles (B) and the resulting mixture is ground; or the EVOH powder (A) and the inorganic particles (B) are suspended in a liquid (e.g., water), fully stirred, then dewatered and dried; or a suspension of the inorganic particles (B) in a liquid (e.g., water) is added to the EVOH powder (A) that is stirred in dry, and this is well mixed and then dewatered and dried. Of those, preferred are the method of dry-blending the EVOH powder (A) with the inorganic particles (B), and the method of dry-blending pellets of the EVOH (a) with the inorganic particles (B) followed by grinding the resulting mixture, in view of the process simplicity and the productivity thereof. Especially preferred is the method of dry-blending the EVOH powder (A) with the inorganic particles (B).

The methods of mixing the EVOH powder (A) with the inorganic particles (B) mentioned above have the advantages mentioned below, as compared with a different method of kneading (A) and (B) in melt followed by grinding the resulting mixture. Specifically, in the above methods, the inorganic particles (B) can be intensively on the surface of the EVOH powder (A) but not inside thereof. The benefit of the resulting powdery coating composition is that the uniformity of the coating film formed of it is good even when an extremely small amount of (B) is added to (A), or that is, the composition produces better results, and its effects are more apparent

The water content of the EVOH composition of the invention is not specifically limited . In view of the uniformity of the coating film formed of the powdery EVOH coating composition, it is desirable that the uppermost limit of the water content of the EVOH composition is smaller than 6 % by weight, more preferably at most 4 % by weight, even more preferably at most 3 % by weight, still more preferably at most 2.5 % by weight. It should be understood that the uniformity of the coating film formed of the powdery EVOH coating composition of the invention can be attained even when the water content of the EVOH composition is 1 % by weight or less. The uniformity of the coating film formed of the powdery EVOH coating composition of the invention is better than that of the coating film formed of an EVOH composition of the EVOH (a) alone, not containing inorganic particles (B). Therefore, the EVOH composition of the invention may be substantially absolutely dry . However, even with a water content of higher than 1 % by weight, for example, having a lowermost water content of at least 1.1 % by weight or even at least 1.2 % by weight, the EVOH composition of the invention is significantly better than any other conventional EVOH powder. Specifically, the advantage of the EVOH composition in that condition is remarkable in that it can be directly used for powdery coating compositions, not requiring any complicated drying treatment, and the uniformity of the coating film formed of it is very good. To that effect, the technical merit of the EVOH composition is noticeable.

The EVOH composition of the invention is favorable for powder coating compositions. The powdery EVOH coating composition of the invention can be used in various powder coating methods of, for example, fluidized bed coating, electrostatic coating or flame spray coating. The coating temperature of the composition varies, depending on the coating method employed and on the melting point of EVOH used. In general, it may fall between 150 and 300°C or so.

The substrate to which the powdery EVOH coating composition of the invention is applied is preferably metal , including, for example, steel tubes and steel sheets. When the powdery EVOH coating composition of the invention is applied to such metallic substrates , the substrates are optionally pre-treated. In general, for example, they are degreased, phosphorylated or plated for the purpose of improving the adhesiveness of the coating film to them, the corrosion resistance of the coating film and the appearance of the coated substrates. Not limited to such metallic substrates, the EVOH composition of the invention is also usable for coating earthenware, ceramics, glass, plastics, etc.

Coating the substrates such as typically metallic substrates with the powdery EVOH coating composition of the invention in the manner as above gives multi-layer structures. In coating them with the composition, if desired, the substrates may be further laminated with any additional resin layer in any desired manner. Examples of the constitution of the multi-layer structures with some additional resin layer are M/E/P1, M/P1/E end M/P1/E/P2, in which M indicates a substrate, E indicates a coating layer of the EVOH composition of the invention, and P1 and P2 each are an additional resin layer. However, the invention is not limited to these.

The additional resin that may be laminated with the coating layer of the EVOH composition of the invention includes , for example, olefin homopolymers and copolymers such as various polyethylenes, polypropylenes, ethylene-vinyl acetate copolymers; carboxylic acid-modified polyolefins; polyesters and polyester elastomers such as polyethylene terephthalate; various polyamide resins such as nylon-11, nylon-12; other thermoplastic resins such as polyvinyl chlorides, polyvinylidene chlorides, acrylic resins, polyurethane elastomers; as well as thermosetting epoxy resins, thermosetting acrylic resins, thermosetting urethane resins, thermosetting polyester resins, and modified derivatives of those resins. Singly or as combined, any of these resins may be laminated with the EVOH coating layer.

The method of combining the coating layer of the EVOH composition of the invention with any other resin layer on substrates is not specifically limited . For example, one substrate is coated separately with the individual powder coating compositions one after another; or a mixture of the EVOH composition of the invention with-one or more other resins is melted and subjected to phase separation in the resulting melt owing to the affinity difference therebetween,

and they are all applied to a substrate at a time to form two or more resin layers on the substrate. Of those, the former method of coating one substrate separately with the individual powder coating compositions one after another is preferred as it does not require any specific consideration for the affinity difference between the resins used.

The surfaces of the thus-coated multi-layer structures are not roughened and their appearance is good, and, in addition, the adhesiveness of the coating layers to the substrate is good. Therefore, the coated multi-layer structures are favorable for tap water pipes, metallic baskets, tanks for chemicals, etc. The EVOH composition of the invention is also favorable for molding methods using resin powders, such as rotational molding and compression molding.

Examples

The invention is described in more detail with reference to the following Examples, which, however, are not intended to restrict the scope of the invention. Unless otherwise specifically indicated, "%" and "parts" in the following Examples are all by weight. Water used in the Examples is ion-exchanged water.

Synthesis Example 1

83.1 kg of vinyl acetate, 8:4 kg of methanol and 24.1 g of vinyltrimethoxysilane were fed into a 200-liter polymerization reactor, in which oxygen was purged away with ethylene gas. The temperature in the reactor was controlled at 60°C, and ethylene gas was introduced into the reactor to increase the pressure inside the reactor up to 6.18 MPa. After the temperature and the pressure in the reactor were stabilized, a solution of 150 g of a polymerization initiator, azobisisovaleronitrile dissolved in 3 kg of methanol was introduced into the reactor to initiate the polymerization of the monomers therein. After 4 hours, the reactor was cooled to 20°C, while at the same time, a solution of 0.2 g of copper acetate dissolved in 20 kg of methanol was fed thereinto to stop the polymerization. At the end of the polymerization, the conversion of vinyl acetate was 35 %.

The ethylene gas in the reactor was purged away, and the polymer liquid was taken out of the reactor and diluted with 20 liters of methanol. The polymer solution thus obtained was fed into a stripping column through its top, while methanol vapor was introduced thereinto through its bottom, whereby the non-reacted monomer still remaining in the polymer liquid was evaporated along with the methanol vapor to obtain a methanol solution of an ethylene-vinyl acetate copolymer. The ethylene content of the polymer was 47 mol%, and the polymer concentration in the polymer solution was 43 %.

The methanol solution of the vinyltrimethoxysilane-modified ethylene-vinyl acetate copolymer thus obtained was fed into a saponification reactor, to which was added 0.4 equivalents, relative to the vinyl ester moiety of the copolymer, of a solution of sodium hydroxide/methanol (80 g/liter). With that, methanol was added to it to thereby yield a polymer mixture with a polymer concentration of 20 %. Heated up to 60°C, the polymer was saponified for about 4 hours with nitrogen gas being introduced into the reactor. After 4 hours, the resulting solution was neutralized with acetic acid to stop the reaction. The degree of saponification of the obtained vinyltrimethoxysilane-modified ethylene-vinyl alcohol copolymer (EVOH) was 99.4 %.

The methanol solution of EVOH thus obtained was heated up to 80°C and the excess methanol was evaporated until the polymer concentration in the resulting solution was 43.3 %. To 100 parts by weight of the resulting methanol solution of EVOH, 5.61 parts by weight of water were added to obtain a polymer solution in methanol/water having a polymer concentration of 41 %. In this, the solvent composition was methanol/water = 91/9 % by weight. The aqueous methanol solution of EVOH was extruded through circular orifices formed in a metal plate into a coagulation bath of methanol/water = 10/90 % by weight at 5°C to form EVOH strands therein. The resulting strands were cut into EVOH pellets each having a diameter of about 3 mm and a length of about 5 mm. The EVOH pellets were dewatered in a centrifuge, then a large quantity of water was added thereto, and the resulting pellets were again dewatered. This operation was repeated several times.

100 parts by weight of the thus-obtained, wet EVOH pellets (water content, 55 % : wet base) were dipped in 845 parts by weight of an aqueous solution containing 0.4 g/liter of acetic acid, 0.28 g/liter of calcium acetate and 0.075 g/liter of potassium dihydrogenphosphate, at 25°C for 6 hours. After having been dipped, the pellets were dewatered, and dried in a hot air drier at 80°C for 3 hours and then at 107°C for 24 hours to obtain dry EVOH pellets. The thus-obtained dry EVOH pellets were analyzed for the carboxylic acid content, the phosphate compound content and the metal ion content of EVOH therein, according to the methods mentioned below.

(1) Determination of carboxylic acid content of EVOH:

20 g of a sample of the dry EVOH pellets was put into 100 ml of ion-exchanged water, and thermally extracted therein at 95°C for 6 hours. The resulting extract was titered for neutralization with 1/50 N NaOH, using phenolphthalein as indicator. The number of mols of the acid thus determined was multiplied by the molecular weight thereof to quantify

the acid content of EVOH. In addition, the extract was subjected to ion chromatography with an eluent of aqueous 0.1 % phosphoric acid solution. The column used was Yokogawa Electric' s SCS5-252. Thus, the carboxyl anion of the acid was identified.

(2) Determination of alkali metal ion content and alkaline earth metal ion content of EVOH:

10 g of a sample of the dry EVOH pellets was put into 50 ml of aqueous 0.01 N HCl solution, and stirred at 95°C for 6 hours. Thus stirred, the aqueous solution was analyzed through ion chromatography for metal ion quantification. The column used was Yokogawa Electric's ICS-C25, and the eluent used was an aqueous solution containing 5.0 mM tartaric acid and 1.0 mM 2,6-pyridinedicarboxylic acid. The quantification was based on the calibration curves of aqueous solutions of various metal salts, such as aqueous sodium chloride solutions, aqueous potassium chloride solutions, aqueous magnesium chloride solutions and aqueous calcium chloride solutions. From the amount of alkali metal ions and alkaline earth metal ions in the sample thus determined, the amount of the alkali metal salt and the alkaline earth metal salt, in terms of the elemental metal in the dry pellets was obtained.

(3) Determination of phosphate compound in EVOH:

10 g of a sample of the dry EVOH pellets was put into 50 ml of aqueous 0.01 N HCl solution, and stirred at 95°C for 6 hours. Thus stirred, the aqueous solution was analyzed through ion chromatography for phosphate ion quantification. The column used was Yokogawa Electric' s ICS-A23, and the eluent used was an aqueous solution containing 2.5 mM sodium carbonate and 1.0 mM sodium hydrogencarbonate. The quantification was based on the calibration curve of aqueous sodium dihydrogenphosphate solutions. From the amount of phosphate ions in the sample thus determined, the amount of the phosphate compound, in terms of the phosphate radical thereof, in the dry pellets was obtained.

The carboxylic acid contained in he dry EVOH pellets was acetic acid, and the acid content of the pellets was 320 ppm. The calcium salt content of the EVOH pellets was 75 ppm in terms of the elemental metal ; the potassium salt content thereof was 35 ppm in terms of the elemental metal ; and the phosphate compound content thereof was 50 ppm in terms of the phosphate radical. The MFR of the EVOH resin pellets, measured at 190°C under a load of 2160 g, was 10 g/10 min. The ratio by weight of the carboxylic acid to the alkali metal salt (in terms of the metal element thereof) in EVOH, carboxylic acid/alkali metal salt was 9.1. The ratio by weight of the carboxylic acid to the alkaline earth metal salt (in terms of the elemental metal thereof) in EVOH, carboxylic acid/alkaline earth metal salt was 4.3.

The degree of modification of the EVOH with the silicon-containing olefinic unsaturated monomer and the intrinsic viscosity thereof were measured according to the methods mentioned below.

(4) Determination of degree of modification of EVOH with silicon-containing olefinic unsaturated monomer:

10 g of a sample of the dry EVOH pellets was put into a platinum crucible, to which was added a mixture of concentrated sulfuric acid/concentrated nitric acid = 1/1. With that, the crucible was heated and the sample was thereby carbonized. It was ashed in an electric furnace at 600°C, and then melted in sodium carbonate at 900°C. After it was cooled to room temperature, distilled water was added thereto to make an aqueous solution of 50 ml in volume. The silicon content of the aqueous solution was measured through atomic absorption spectrometry under the condition mentioned below, from which was obtained the degree of modification (Y) of EVOH with the silicon-containing olefinic unsaturated monomer.

Device: Perkin-Elmer's 2380 Model,
Wavelength for measurement: 251.6 nm,
Slit width: 0.2 nm,
Lamp: Perkin-Elmer's #303-6063,
Lamp current: 40 mA,
Frame: Acetylene-nitrous oxide frame.

(5) Intrinsic viscosity of EVOH:

0.20 g of a sample of the dry EVOH pellets was dissolved in 40 ml of aqueous phenol (water/phenol = 15/85 % by weight) under heat at 60°C for 3 to 4 hours, and the viscosity of the resulting solution was measured at the point of 30°C with an Ostwald's viscometer (t0 = 90 seconds). According to the equation mentioned below, the intrinsic viscosity [η] of EVOH was obtained.

$$[\eta] = (2 \times (\eta sp - \ln \eta rel))^{1/2}/C \text{ (liter/g)}$$

in which;

$\eta sp$ = t/t0 -1 (specific viscosity),
$\eta rel$ = t/t0 (relative viscosity),
C indicates the EVOH concentration in the sample (g/l),
t0 indicates the time taken by the blank (aqueous phenol) to pass through the viscometer,
t indicates the time taken by the sample-containing aqueous phenol solution to pass through the viscometer.

The vinyltrimethoxysilane content of the EVOH was 0.01 mol%; and the intrinsic viscosity [η] thereof was 0.0856 liter/g.

Synthesis Example 2

EVOH having an ethylene content of 47 mol%, a degree of saponification of 99.4 %, and a degree of modification with a silicon-containing olefinic unsaturated monomer of 0 mol% was obtained in the same manner as in Synthesis Example 1, for which, however, vinyltrimethoxysilane was not added to the polymerization system. The acetic acid content of the EVOH obtained herein was 320 ppm; the calcium salt content thereof was 75 ppm (in terms of the elemental metal); the potassium salt content thereof was 35 ppm (in terms of the elemental metal) ; and the phosphate compound content thereof was 50 ppm (in terms of the phosphate radical). The MFR of the EVOH, measured at 190°C under a load of 2160 g, was 16 g/10 min. The ratio by weight of the carboxylic acid to the alkali metal salt (in terms of the elemental metal thereof) in the EVOH, carboxylic acid/alkali metal salt was 9.1. The ratio by weight of the carboxylic acid to the alkaline earth metal salt (in terms of the elemental metal thereof) therein, carboxylic acid/alkaline earth metal salt was 4.3.

Synthesis Example 3

100 parts by weight of wet pellets (water content, 55 % : wet base) of EVOH (a) having an ethylene content of 47 mol%, a degree of saponification of 99.6 %, and a degree of modification with a silicon-containing olefinic unsaturated monomer of 0 mol% were dipped in 845 parts by weight of an aqueous solution containing 0.25 g/liter of acetic acid and 0.483 g/liter of sodium acetate, at 25°C for 6 hours. After having been dipped, the pellets were dewatered, and dried in a hot air drier at 80°C for 3 hours and then at 107°C for 24 hours to obtain dry pellets of EVOH (a). The acetic acid content of the EVOH was 150 ppm, and the sodium salt content thereof was 150 ppm (in terms of the elemental metal). The MFR of the EVOH, measured at 190°C under a load of 2160 g, was 46 g/10 min. The ratio by weight of the carboxylic acid to the alkali metal salt (in terms of the elemental metal thereof) in the EVOH, carboxylic acid/alkali metal salt was 1.

Example 1

The dry EVOH pellets obtained in Synthesis Example 1 were used herein for EVOH (a). Concretely, the dry pellets were cooled with liquid nitrogen and milled in a grinder to obtain an EVOH powder (A) having a particle size of from 45 to 425 μm of EVOH (a). (Precisely, the EVOH powder (A) prepared herein contained at least 80 % by weight of particles of EVOH (a) that had passed through a JIS standard sieve having a nominal size of 425 μm but not through a JIS standard sieve having a nominal size of 45 μm.) To 100 parts of the EVOH powder (A), were added 0.1 parts of inorganic particles (B), Nippon Aerosil's Aerosil R972 (this is silica powder of which the mean particle size of the primary particles is 16 nm, and its surface was processed with a dimethylsilyl compound), and well shaken to obtain an ethylene-vinyl alcohol copolymer composition comprising a mixture of (A) and (B). The water content of the EVOH powder was 1.4%. It was measured according to the method mentioned below.

(6) Determination of water content of EVOH composition:

Using Mettler's HR73-Halogen, a water content meter, about 2 g of a sample of the EVOH composition was dried at 180°C for 20 minutes to determine the water content (X) of the EVOH composition.

Next, the surface of an iron plate of 0.8 mm thickness x 50 mm × 100 mm was degreased by washing it with detergent. The iron plate was coated with the powdery EVOH composition produced in the above, with a fluidized bed coating method. Concretely, the fluidized bed coating method comprises fluidizing the EVOH composition powder in a fluidizing chamber by introducing air thereinto through a multi-hole plate while suspending the iron plate as a substrate

in the fluidized layer of the powder in the chamber to thereby coat the substrate with the powder. The fluidized bed coating condition is mentioned below.

Substrate pre-heating: at 280°C for 10 minutes,
Dipping time: 5 seconds,
Post-heating: at 200°C for 5 minutes.

The iron plate thus coated with the EVOH powder was evaluated regarding the uniformity, the smoothness and the glossiness of the coating film, according to the criteria mentioned below. In addition, the degree of yellowing of the coating film and the adhesiveness of the coating film to the substrate were measured according to the methods mentioned below.

(7) Smoothness of coating film:

The coating film formed on the substrate was visually checked for the smoothness thereof, and evaluated according to the criteria mentioned below.

Rank Condition

A (good): The coating film is smooth and good.

B (good): The coating film was roughened a little, but is on the level of practical use.

C (not good): The coating film was much roughened, and is not on the level of practical use.

(8) glossiness of coating film:

The coating film formed on the substrate was visually checked for the glossiness thereof, and evaluated according to the criteria mentioned below.

Rank Condition

A (good): The coating film is glossy and beautiful.

B (good): The coating film is not so glossy, but is on the level of practical use.

C (not good): The coating film is not glossy at all, like a frosted film, and is of little practical use.

(9) Degree of yellowing of coating film:

The coating film formed on the substrate was visually checked for the color thereof, and evaluated according to the criteria mentioned below.

Rank Condition

A (good): The coating film was yellowed little.

B (good): The coating film was yellowed a little, but is on the level of practical use.

C (not good): The coating film was much yellowed and its appearance is not good.

(10) Adhesiveness of coating film to substrate:

Using a cutting knife, the EVOH coating film formed on the substrate was partly cut away, it was tried to peel it from the substrate. The adhesiveness of the coating film to the substrate was evaluated according to the criteria mentioned below.

Rank Condition

A (good): Having firmly adhered to the substrate, the coating film was difficult to peel off.

B (good): When pulled slowly from the substrate, the coating film was peeled off from it, and while being peeled, it did not cut.

C (not good): The coating film was readily peeled off from the substrate.

Based on the criteria mentioned above, the iron plate coated with the EVOH powder in this Example was evaluated regarding the uniformity of the coating film (the smoothness and the glossiness of the coating film), the degree of yellowing of the coating film, and the adhesiveness of the coating film to the substrate. The iron plate coated with the EVOH powder in this Example ranked A in point of the smoothness of the coating film, the glossiness of the coating film, the degree of yellowing of the coating film and the adhesiveness of the coating film to the substrate, and ranked B in point of the glossiness of the coating film.

Example 2

An EVOH composition comprising EVOH powder (A) and inorganic particles (B) was produced in the same manner as in Example 1, for which, however, the EVOH prepared in Synthesis Example 2 was used for EVOH (a). Also in the same manner as in Example 1, an iron plate was coated with the powdery EVOH composition in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Example 3

An EVOH composition comprising EVOH powder (A) and inorganic particles (B) was produced in the same manner as in Example 2, for which, however, Nippon Aerosil's Aerosil R974 (this is silica powder of which the mean particle size of the primary particles is 12 nm, and its surface was processed with a dimethylsilyl compound) was used for the inorganic particles (B). Also in the same manner as in Example 2, an iron plate was coated with the powdery EVOH composition in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Example 4

An EVOH composition comprising EVOH powder (A) and inorganic particles (B) was produced in the same manner as in Example 2, for which, however, Nippon Aerosil's Aerosil RX200 (this is silica powder of which the mean particle size of the primary particles is 12 nm, and its surface was processed with a trimethylsilyl compound) was used for the inorganic particles (B). Also in the same manner as in Example 2, an iron plate was coated with the powdery EVOH composition in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Example 5

An EVOH composition comprising EVOH powder (A) and inorganic particles (B) was produced in the same manner as in Example 2, for which, however, Nippon Aerosil's Aerosil 200CF (this is silica powder of which the mean particle size of the primary particles is 12 nm, and its surface was not processed) was used for the inorganic particles (B). Also in the same manner as in Example 2, an iron plate was coated with the powdery EVOH composition in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Example 6

An EVOH composition comprising EVOH powder (A) and inorganic particles (B) was produced in the same manner as in Example 2, for which, however, used was the EVOH (a) prepared in Synthesis Example 3. Also in the same manner as in Example 2, an iron plate was coated with the powdery EVOH composition in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Comparative Example 1

A powdery coating resin was produced in the same manner as in Example 2, which, however, did not contain inorganic particles (B) but was the EVOH (a) having a particle size of from 45 to 425 μm alone. Also in the same manner as in Example 2, an iron plate was coated with the powdery coating resin in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Comparative Example 2

An EVOH composition comprising EVOH powder (A) and inorganic particles (B) was produced in the same manner as in Example 2, in which, however, the amount of the inorganic particles (B) was 5 parts by weight relative to 100 parts by weight of the EVOH powder (A) therein. Also in the same manner as in Example 2, an iron plate was coated with the powdery EVOH composition in a fluidized bed coating method, and the coated plate was evaluated with respect to the uniformity of the coating film (the smoothness and the glossiness of the coating film), the degree of yellowing of the coating film, and the adhesiveness of the coating film to the substrate. The test results are shown in Table 1.

Table 1

| | Water Content of Powder of EVOH Composition (wt.%) | Smoothness of Coating Film | Glossiness of Coating Film | Degree of Yellowing of Coating Film | Adhesiveness of Coating Film to Substrate |
|---|---|---|---|---|---|
| Example 1 | 1.4 | A | B | A | A |
| Example 2 | 1.5 | A | B | A | B |
| Example 3 | 1.3 | A | B | A | B |
| Example 4 | 1.5 | A | B | A | B |
| Example 5 | 1.3 | B | B | A | B |
| Example 6 | 1.6 | A | A | A | B |
| Comp. Example 1 | 1.4 | C | C | A | A |
| Comp. Example 2 | 1.6 | C | C | A | C |

Though their water content is higher than 1 % by weight, the powdery EVOH coating compositions of Examples 1 to 6 of the invention all formed good coating films of high uniformity (that is, the coating films formed were all smooth and glossy), when applied to substrates in a mode of powder coating. In particular, the coating film formed of the EVOH composition of Example 1, in which the EVOH (a) was modified with a silicon-containing olefinic unsaturated monomer to a degree of modification of 0.01 mol%, was very good with respect to its adhesiveness to the substrate.

As opposed to these, the coating film formed of the powdery coating resin of Comparative Example 1, which did not contain inorganic particles (B) but was the EVOH (a) alone, was not good. Though the water content of the powdery coating resin of Comparative Example 1 was almost on a level with that of the EVOH composition of Example 2, the coating film formed of the powdery coating resin of EVOH(a) alone of Comparative Example 1 was not uniform

and was not glossy and its appearance was not good.

The coating film formed of the EVOH composition of Comparative Example 2, in which the amount of the inorganic particles (B) is larger than 2 parts by weight relative to 100 parts by weight of the EVOH powder (A) therein, was not uniform and was not glossy and its appearance was not good.

As described and demonstrated in detail hereinabove, the powdery EVOH coating composition of the invention forms a coating film of good uniformity on substrates to which it has been applied. In particular, not only dry but also wet having a water content of more than 1 % by weight, the EVOH composition of the invention forms every time a coating film of good uniformity. This demonstrates the superiority of the invention to any other related art.

## Claims

1. An ethylene-vinyl alcohol copolymer composition that comprises 100 parts by weight of a powder (A) having a particle size of from 22 to 850 μm of an ethylene-vinyl alcohol copolymer (a) which has an ethylene content of from 2 to 60 mol% and has a degree of saponification of higher than 95 %, and from 0.0001 to 2 parts by weight of inorganic particles (B) of which the primary particles have a mean particle size of from 1 to 100 nm.

2. The ethylene-vinyl alcohol copolymer composition as claimed in claim 1, wherein the inorganic particles (B) adhere to the surface of the powder (A).

3. The ethylene-vinyl alcohol copolymer composition as claimed in claim 1 or 2, wherein the ethylene-vinyl alcohol copolymer (a) contains from 10 to 5000 ppm of a carboxylic acid.

4. The ethylene-vinyl alcohol copolymer composition as claimed in claim 3, wherein the carboxylic acid is at least one selected from a group consisting of acetic acid, propionic acid and lactic acid.

5. The ethylene-vinyl alcohol copolymer composition as claimed in any one of claims 1 to 4, wherein the ethylene-vinyl alcohol copolymer (a) contains from 5 to 500 ppm, in terms of the elemental metal, of an alkali metal salt.

6. The ethylene-vinyl alcohol copolymer composition as claimed in claim 1 or 2, wherein the ethylene-vinyl alcohol copolymer (a) contains from 10 to 5000 ppm of a carboxylic acid and from 5 to 500 ppm, in terms of the elemental metal, of an alkali metal salt, and the ratio by weight of the carboxylic acid to the alkali metal salt (in terms of the elemental metal) therein, carboxylic acid/alkali metal salt, falls between 0.1 and 15.

7. The ethylene-vinyl alcohol copolymer composition as claimed in any one of claims 1 to 5, wherein the ethylene-vinyl alcohol copolymer (a) contains from 5 to 250 ppm, in terms of the elemental metal, of an alkaline earth metal salt.

8. The ethylene-vinyl alcohol copolymer composition as claimed in claim 1 or 2, wherein the ethylene-vinyl alcohol copolymer (a) contains from 10 to 5000 ppm of a carboxylic acid and from 5 to 250 ppm, in terms of the elemental metal, of an alkaline earth metal salt, and the ratio by weight of the carboxylic acid to the alkaline earth metal salt (in terms of the elemental metal) therein, carboxylic acid/alkaline earth metal salt, falls between 0.2 and 15.

9. The ethylene-vinyl alcohol copolymer composition as claimed in any one of claims 1 to 8, wherein the ethylene-vinyl alcohol copolymer (a) contains from 1 to 300 ppm, in terms of the phosphate radical, of a phosphate compound.

10. The ethylene-vinyl alcohol copolymer composition as claimed in any one of claims 1 to 9, wherein the ethylene-vinyl alcohol copolymer (a) is modified with a silicon-containing olefinic unsaturated monomer, and the degree of modification of the copolymer with the monomer falls between 0.0002 and 0.5 mol%.

11. The ethylene-vinyl alcohol copolymer composition as claimed in any one of claims 1 to 10, wherein the inorganic particles (B) are of silica and/or aluminium oxide.

12. The ethylene-vinyl alcohol copolymer composition as claimed in any one of claims 1 to 11, wherein the inorganic particles (B) are hydrophobicated on their surfaces.

13. A powder coating composition that contains the ethylene-vinyl alcohol copolymer composition of any one of claims 1 to 12.

14. A multi-layer structure fabricated by applying the powder coating composition of claim 13 onto a substrate.

15. The multi-layer structure as claimed in claim 14, wherein the substrate is metal.

16. A method for producing the ethylene-vinyl alcohol copolymer composition of any one of claims 1 to 12, which comprises dry-blending 100 parts by weight of a powder (A) having a particle size of from 22 to 850 μm of an ethylene-vinyl alcohol copolymer (a) that has an ethylene content of from 2 to 60 mol% and has a degree of saponification of higher than 95 %, with from 0.0001 to 2 parts by weight of inorganic particles (B) of which the primary particles have a mean particle size of from 1 to 100 nm.

17. A method for producing the ethylene-vinyl alcohol copolymer composition of any one of claims 1 to 12, which comprises dry-blending 100 parts by weight of an ethylene-vinyl alcohol copolymer (a) that has an ethylene content of from 2 to 60 mol% and has a degree of saponification of higher than 95 %, with from 0.0001 to 2 parts by weight of inorganic particles (B) of which the primary particles have a mean particle size of from 1 to 100 nm, followed by grinding the resulting mixture.

**Patentansprüche**

1. Ethylen-Vinylalkoholcopolymerzusammensetzung, umfassend 100 Gewichtsteile eines Pulvers (A) mit einer Teilchengröße von 22 bis 850 μm eines Ethylen-Vinylalkoholcopolymers (a), das einen Ethylengehalt von 2 bis 60 Mol% und einen Verseifungsgrad von mehr als 95% aufweist, und 0,0001 bis 2 Gewichtsteile anorganischer Teilchen (B), von welchen die Primärteilchen eine mittlere Teilchengröße von 1 bis 100 nm aufweisen.

2. Ethylen-Vinylalkoholcopolymerzusammensetzung gemäß Anspruch 1, wobei die anorganischen Teilchen (B) an der Oberfläche des Pulvers (A) anhaften.

3. Ethylen-Vinylalkoholcopolymerzusammensetzung gemäß Anspruch 1 oder 2, wobei das Ethylen-Vinylalkoholcopolymer (a) 10 bis 5000 ppm einer Carbonsäure enthält.

4. Ethylen-Vinylalkoholcopolymerzusammensetzung gemäß Anspruch 3, wobei die Carbonsäure mindestens eine, ausgewählt aus Essigsäure, Propionsäure und Milchsäure, ist.

5. Ethylen-Vinylalkoholcopolymerzusammensetzung gemäß einem der Ansprüche 1 bis 4, wobei das Ethylen-Vinylalkoholcopolymer (a) 5 bis 500 ppm, bezogen auf das elementare Metall, eines Alkalimetallsalzes enthält.

6. Ethylen-Vinylalkoholcopolymerzusammensetzung gemäß Anspruch 1 oder 2, wobei das Ethylen-Vinylalkoholcopolymer (a) 10 bis 5000 ppm einer Carbonsäure und 5 bis 500 ppm, bezogen auf das elementare Metall, eines Alkalimetallsalzes enthält und das Gewichtsverhältnis der Carbonsäure zu dem Alkalimetallsalz (bezogen auf das elementare Metall), Carbonsäure/Alkalimetallsalz, zwischen 0,1 und 15 beträgt.

7. Ethylen-Vinylalkoholcopolymerzusammensetzung gemäß einem der Ansprüche 1 bis 5, wobei das Ethylen-Vinylalkoholcopolymer (a) 5 bis 250 ppm, bezogen auf das elementare Metall, eines Erdalkalimetallsalzes enthält.

8. Ethylen-Vinylalkoholcopolymerzusammensetzung gemäß Anspruch 1 oder 2, wobei das Ethylen-Vinylalkoholcopolymer (a) 10 bis 5000 ppm einer Carbonsäure und 5 bis 250 ppm bezogen auf das elementare Metall, eines Erdalkalimetallsalzes enthält und das Gewichtsverhältnis der Carbonsäure zu dem Erdalkalimetallsalz (bezogen auf das elementare Metall), Carbonsäure/Erdalkalimetallsalz, zwischen 0,2 und 15 beträgt.

9. Ethylen-Vinylalkoholcopolymerzusammensetzung gemäß einem der Ansprüche 1 bis 8, wobei das Ethylen-Vinylalkoholcopolymer (a) 1 bis 300 ppm, bezogen auf den Phosphatrest, einer Phosphatverbindung enthält.

10. Ethylen-Vinylalkoholcopolymerzusammensetzung gemäß einem der Ansprüche 1 bis 9, wobei das Ethylen-Vinylalkoholcopolymer (a) mit einem Silizium-enthaltenden olefinisch ungesättigten Monomer modifiziert ist und der Modifizierungsgrad des Copolymers mit dem Monomer zwischen 0,0002 und 0,5 Mol% beträgt.

11. Ethylen-Vinylalkoholcopolymerzusammensetzung gemäß einem der Ansprüche 1 bis 10, wobei die anorganischen Teilchen (B) aus Siliziumoxid und/oder Aluminiumoxid sind.

12. Ethylen-Vinylalkoholcopolymerzusammensetzung gemäß einem der Ansprüche 1 bis 11, wobei die anorganischen Teilchen (B) auf ihrer Oberfläche hydrophobisiert sind.

13. Pulverbeschichtungszusammensetzung, die die Ethylen-Vinylalkoholcopolymerzusammensetzung nach einem der Ansprüche 1 bis 12 enthält.

14. Mehrschichtige Struktur, hergestellt durch Aufbringen der Pulverbeschichtungszusammensetzung gemäß Anspruch 13 auf ein Substrat.

15. Mehrschichtige Struktur gemäß Anspruch 14, wobei das Substrat ein Metall ist.

16. Verfahren zur Herstellung der Ethylen-Vinylalkoholcopolymerzusammensetzung nach einem der Ansprüche 1 bis 12, welches umfaßt Vermischen in der Trockne von 100 Gewichtsteilen eines Pulvers (A) mit einer Teilchengröße von 22 bis 850 μm eines Ethylen-Vinylalkoholcopolymers (a), das einen Ethylengehalt von 2 bis 60 Mol% und einen Verseifungsgrad von mehr als 95% aufweist, mit 0,0001 bis 2 Gewichtsteilen an anorganischen Teilchen (B), von welchen die Primärteilchen eine mittlere Teilchengröße von 1 bis 100 nm aufweisen.

17. Verfahren zur Herstellung der Ethylen-Vinylalkoholcopolymerzusammensetzung nach einem der Ansprüche 1 bis 12, welches umfaßt Vermischen in der Trockne von 100 Gewichtsteilen eines Ethylen-Vinylalkoholcopolymers (a), das einen Ethylengehalt von 2 bis 60 Mol% und einen Verseifungsgrad von mehr als 95% aufweist, mit 0,0001 bis 2 Gewichtsteilen an anorganischen Teilchen (B), von welchen die Primärteilchen eine mittlere Teilchengröße von 1 bis 100 nm aufweisen, gefolgt von Vermahlen des erhaltenen Gemisches.

## Revendications

1. Composition à base de copolymère d'éthylène/alcool vinylique qui comprend 100 parties en poids d'une poudre (A) ayant une taille de particules de 22 à 850 μm d'un copolymère d'éthylène/alcool vinylique (a) qui a une teneur en éthylène de 2 à 60 % en moles et a un degré de saponification supérieur à 95 %, et de 0,0001 à 2 parties en poids de particules inorganiques (B) dont les particules primaires ont une taille moyenne de particules de 1 à 100 nm.

2. Composition à base de copolymère d'éthylène/alcool vinylique selon la revendication 1, dans laquelle les particules inorganiques (B) adhèrent à la surface de la poudre (A).

3. Composition à base de copolymère d'éthylène/alcool vinylique selon la revendication 1 ou la revendication 2, dans laquelle le copolymère d'éthylène/alcool vinylique (a) contient de 10 à 5000 ppm d'un acide carboxylique.

4. Composition à base de copolymère d'éthylène/alcool vinylique selon la revendication 3, dans laquelle l'acide carboxylique est au moins un acide choisi dans un groupe constitué par l'acide acétique, l'acide propionique et l'acide lactique.

5. Composition à base de copolymère d'éthylène/alcool vinylique selon l'une quelconque des revendications 1 à 4, dans laquelle le copolymère d'éthylène/alcool vinylique (a) contient de 5 à 500 ppm, en termes du métal élémentaire, d'un sel de métal alcalin.

6. Composition à base de copolymère d'éthylène/alcool vinylique selon la revendication 1 ou 2, dans laquelle le copolymère d'éthylène/alcool vinylique (a) contient de 10 à 5000 ppm d'un acide carboxylique et de 5 à 500 ppm, en termes du métal élémentaire, d'un sel de métal alcalin, et le rapport en poids de l'acide carboxylique sur le sel de métal alcalin (en termes du métal élémentaire) contenu, acide carboxylique/sel de métal alcalin, est compris entre 0,1 et 15.

7. Composition à base de copolymère d'éthylène/alcool vinylique selon l'une quelconque des revendications 1 à 5, dans laquelle le copolymère d'éthylène/alcool vinylique (a) contient de 5 à 250 ppm, en termes du métal élémentaire, d'un sel de métal alcalino-terreux.

8. Composition à base de copolymère d'éthylène/alcool vinylique selon la revendication 1 ou 2, dans laquelle le copolymère d'éthylène/alcool vinylique (a) contient de 10 à 5000 ppm d'un acide carboxylique et de 5 à 2.50 ppm; en termes du métal élémentaire, d'un sel de métal alcalino-terreux, et le rapport en poids de l'acide carboxylique

sur le sel de métal alcalino-terreux (en termes du métal élémentaire) contenu , acide carboxylique/sel de métal alcalino-terreux, est compris entre 0,2 et 15.

**9.** Composition à base de copolymère d'éthylène/alcool vinylique selon l'une quelconque des revendications 1 à 8, dans laquelle le copolymère d'éthylène/alcool vinylique (a) contient de 1 à 300 ppm, en termes du radical phosphate, d'un composé du phosphate.

**10.** Composition à base de copolymère d'éthylène/alcool vinylique selon l'une quelconque des revendications 1 à 9, dans laquelle le copolymère d'éthylène/alcool vinylique (a) est modifié avec un monomère oléfinique insaturé contenant du silicium, et le degré de modification du copolymère avec le monomère est compris entre 0,0002 et 0,5% en moles.

**11.** Composition à base de copolymère d'ethylène/alcool vinylique selon l'une quelconque des revendications 1 à 10, dans laquelle les particules inorganiques (B) sont d'oxyde d'aluminium et/ou de silice.

**12.** Composition à base de copolymère d'éthylène/alcool vinylique selon l'une quelconque des revendications 1 à 11, dans laquelle les particules inorganiques (B) sont hydrophobisées sur leurs surfaces.

**13.** Composition de revêtement en poudre qui contient la composition à base de copolymère d'éthylène/alcool vinylique selon l'une quelconque des revendications 1 à 12.

**14.** Structure multicouche fabriquée par application sur un substrat de la composition de revêtement en poudre selon la revendication 13.

**15.** Structure multicouche selon la revendication 14, dans laquelle le substrat est du métal.

**16.** Procédé de production de la composition à base de copolymère d'éthylène/alcool vinylique selon l'une quelconque des revendications 1 à 12, qui comprend le mélange à sec de 100 parties en poids d'une poudre (A) ayant une taille de particules de 22 à 850 μm d'un copolymère d'éthylène/alcool vinylique (a) qui a une teneur en éthylène de 2 à 60 % en moles et a un degré de saponification supérieur à 95 %, avec de 0,0001 à 2 parties en poids de particules inorganiques (B) dont les particules primaires ont une taille moyenne de particules de 1 à 100 nm.

**17.** Procédé de production de la composition à base de copolymère d'éthylène/alcool vinylique selon l'une quelconque des revendications 1 à 12, qui comprend le mélange à sec de 100 parties en poids d'un copolymère d'éthylène/alcool vinylique (a) qui a une teneur en éthylène de 2 à 60 % en moles et a un degré de saponification supérieur à 95 %, avec de 0,0001 à 2 parties en poids de particules inorganiques (B) dont les particules primaires ont une taille moyenne de particules de 1 à 100 nm, suivi du broyage du mélange obtenu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3115472 A
- JP 9241537 A